# EUROPEAN PATENT APPLICATION

(11) **EP 4 410 479 A1**
(43) Date of publication of application: **07.08.2024**
(21) Application number: 24153627.5
(22) Date of filing: 24.01.2024
(51) Int. Cl.: B24B 49/12, B23Q 17/24

(54) **CUTTING MACHINE AND READER**

(30) Priority: 31.01.2023 JP 2023012429
(71) Applicant: Disco Corporation, Tokyo 143-8580 (JP)
(72) Inventor: WATASE, Emiko, Tokyo, 143-8580 (JP); KASAI, Tsuyoshi, Tokyo, 143-8580 (JP)
(74) Representative: Hoffmann Eitle

(57) **Abstract**

A cutting machine includes a cutting unit capable of cutting a workpiece with a cutting blade applied on an outer surface thereof with an identification code that indicates type information of the cutting blade, a detection unit, and a controller. The detection unit includes a base with a blade entry indentation formed therein, a light-emitting unit that applies light toward the cutting blade entering into the blade entry indentation, and a light-receiving unit that receives the light reflected by the cutting blade. The controller includes a conversion section configured to read the identification code on the basis of the light applied to the identification code and received at the light-receiving unit, and to acquire the type information of the cutting blade.

## Description

### BACKGROUND OF THE INVENTION

### Field of the Invention

The present invention relates to a cutting machine, and also to a reader. The cutting machine includes a cutting unit with a cutting blade mounted thereon to cut a workpiece, and can acquire type information of the cutting blade by reading an identification code applied to the cutting blade. The reader can acquire type information of a mobile body or a rotary body by reading an identification code applied to the mobile body or the rotary body.

### Description of the Related Art

Device chips to be mounted for use in electronic equipment are formed from a wafer such as a silicon wafer, a package substrate, or a ceramic substrate. Such individual device chips can be formed by setting a plurality of intersecting scribe lines on a front surface of a wafer or the like, forming devices in respective regions defined by the scribe lines, and then dividing the wafer or the like along the scribe lines. For dividing the wafer or the like, a cutting machine including a cutting unit with, for example, an annular cutting blade mounted thereon is used (see JP 2000-87282A). The cutting blade has an annular hub formed from a metal material, for example, such as aluminum. On an outer periphery of the hub, a grindstone portion is formed by a process such as Ni plating. The grindstone portion contains a bonding material composed of a material such as metal, and abrasive grits of diamond or the like innumerably dispersed and fixed in the bonding material.

With a cutting machine, a wide variety of workpieces are processed. There are cutting blades of different types suited for various workpieces, respectively. A cutting blade of a type suited for cutting a workpiece to be processed is selected and mounted on a cutting unit. In a controller (control unit) of the cutting machine, information (type information) on the type of the mounted cutting blade is recorded. The controller of the cutting machine then operates individual elements of the cutting machine under conditions suited for the type of the mounted cutting blade, and cuts the workpiece under optimal conditions.

The work to input the type information of the cutting blade in the controller has heretofore been manually performed by an operator (worker). In this manner, however, the operator may input incorrect information by mistake, so that the type information of the cutting blade may not be correctly inputted in the controller. If this is the case, the controller operates the individual elements under improper conditions to cut the workpiece by the cutting blade, and hence a problem arises in that processing results of predetermined quality are not available. A method has therefore been developed, in which an identification code (barcode, two-dimensional code, or the like) that indicates the type information of a cutting blade is applied to the cutting blade or a blade case for the cutting blade, and in addition a reader for the identification code is disposed on an outer surface of the cutting machine. With this method, the type information of the cutting blade can be automatically recorded in the controller by allowing the reader to read the identification code when the cutting blade is mounted on the cutting unit (see JP 2001-144034 A, and JP 2014-143323 A).

### SUMMARY OF THE INVENTION

After allowing the reader to read the identification code, a different cutting blade may however be mounted in error on a cutting unit. Further, a cutting blade of a type different from the type which is indicated by the identification code applied to the blade case may be placed in the blade case. Even in these cases, the cutting of the workpiece will be performed under conditions suited for the cutting blade of the type indicated by the identification code. As a result, the cutting of the workpiece will be performed under conditions unsuited for the cutting blade actually mounted on the cutting unit. As a matter of fact, it is laborious for an operator to perform the work to have the identification code read, and moreover, large cost is needed when the reader for the identification code is assembled in the outer surface of the cutting machine.

The present invention therefore has, as objects thereof, the provision of a cutting machine capable of reliably and easily acquiring the type information of a mounted cutting blade, and a reader capable of reliably and easily reading an identification code applied to a mobile body or a rotary body.

In accordance with a first aspect of the present invention, there is provided a cutting machine including a cutting unit capable of mounting thereon a cutting blade including an annular grindstone portion and applied on an outer surface thereof with an identification code that indicates type information of the cutting blade, and capable of cutting a workpiece with the grindstone portion by rotating the cutting blade, a chuck table that holds the workpiece to be cut by the cutting unit, a detection unit, and a controller that controls the cutting unit, the chuck table, and the detection unit. The detection unit includes a base with a blade entry indentation formed therein to permit entry of the cutting blade, a light-emitting unit disposed in one of opposite side walls of the blade entry indentation of the base to generate light and to apply the light toward the cutting blade entering into the blade entry indentation, and a light-receiving unit disposed in the one side wall of the blade entry indentation to receive the light reflected by the cutting blade. The controller includes a conversion section configured to read the type information on the basis of the light generated at the light-emitting unit, applied to the identification code applied to the cutting blade, reflected by the cutting blade, and received at the light-receiving unit, and to acquire the type information of the cutting blade, and a storage section configured to store the acquired type information of the cutting blade.

Preferably, the conversion section may generate digital signals from electrical signals generated on the basis of the light received at the light-receiving unit, and may read the type information on the basis of the digital signals.

Preferably, the conversion section may generate the digital signals by sampling the electrical signals at a sampling frequency corresponding to a rotational speed at which the cutting unit rotates the cutting blade when the workpiece is cut.

Preferably, the controller may further include a determination section configured to determine, on the basis of the type information of the cutting blade as acquired from the identification code, whether or not the cutting blade is suited for cutting the workpiece.

Preferably, the detection unit may further include a second light-receiving unit disposed in the other side wall of the blade entry indentation of the base to receive the light generated at the light-emitting unit and emitted from the light-emitting unit toward the other side wall, and the controller may include a lower edge position detection section configured to detect a lower edge position of the grindstone portion of the cutting blade on the basis of a transmission amount of the light emitted from the light-emitting unit and received at the second light-receiving unit with or without being partly blocked by the grindstone portion of the cutting blade.

Preferably, the detection unit may further include a second light-emitting unit disposed in the other side wall of the blade entry indentation of the base to apply light toward the opposing light-receiving unit, and the controller may include a lower edge position detection section configured to detect a lower edge position of the grindstone portion of the cutting blade on the basis of a transmission amount of the light generated at the second light-emitting unit and received at the light-receiving unit with or without being partly blocked by the grindstone portion of the cutting blade.

In accordance with a second aspect of the present invention, there is provided a reader for reading an identification code, which indicates type information, of a mobile body having the identification code applied thereto. The reader includes a light-emitting unit that emits light toward the identification code of the mobile body which is moving, a light-receiving unit that receives the light reflected by the identification code, a photoelectric conversion section that converts amounts of the light, which have been received at the light-receiving unit, to electrical signals, and a digital conversion section that converts the electrical signals of the light, which have been converted from the amounts of the light at the photoelectric conversion section, to digital signals, and acquires the type information of the mobile body from the digital signals.

In accordance with a third aspect of the present invention, there is provided a reader for reading an identification code, which indicates type information, of a rotary body having the identification code applied thereto. The reader includes a light-emitting unit that emits light toward the identification code of the rotary body which is rotating, a light-receiving unit that receives the light reflected by the identification code, a photoelectric conversion section that converts amounts of the light, which have been received at the light-receiving unit, to electrical signals, and a digital conversion section that converts the electrical signals of the light, which have been converted from the amounts of the light at the photoelectric conversion section, to digital signals, and acquires the type information of the rotary body from the digital signals.

The cutting machine according to the first aspect of the present invention includes the cutting unit, the chuck table, the detection unit, and the controller (control unit) that controls these elements. The detection unit includes the base with the blade entry indentation formed therein to permit entry of the cutting blade. The detection unit further includes the light-emitting unit disposed in the one of the opposite side walls of the blade entry indentation of the base to generate light and to apply the light toward the cutting blade entering into the blade entry indentation, and the light-receiving unit disposed in the one side wall of the blade entry indentation to receive the light reflected by the cutting blade.

The controller includes the conversion section configured to read the type information on the basis of the light generated at the light-emitting unit, applied to the identification code applied to the cutting blade, reflected by the cutting blade, and received at the light-receiving unit, and to acquire the type information of the cutting blade. As described above, the cutting machine according to the first aspect of the present invention can acquire the identification information through reading by itself of the identification code applied to the cutting blade that has been mounted beforehand on the cutting unit. An operator or the like can therefore easily and reliably acquire the identification information of the cutting blade, which is mounted on the cutting unit, without much extra labor. Further, the detection unit that is used for the acquisition of the identification information can also be used when the lower edge position of the grindstone portion of the cutting blade is detected. The cutting machine according to the first aspect of the present invention does not need to include a blade-edge detection unit in addition to the detection unit, and can be realized with a simple construction and at low cost compared with a case including both the detection unit and the blade edge detection unit.

According to the first to third aspects of the present invention, there are hence provided a cutting machine that can reliably and easily acquire the type information of a mounted cutting blade, a reader that can reliably and easily read an identification code applied to a mobile body, and a reader that can reliably and easily read an identification code applied to a rotary body.

The above and other objects, features and advantages of the present invention and the manner of realizing them will become more apparent, and the invention itself will best be understood from a study of the following description and appended claims with reference to the attached drawings showing preferred embodiments of the invention.

### BRIEF DESCRIPTION OF THE DRAWINGS

FIG. 1 is a perspective view schematically depicting a cutting machine according to an embodiment of the first aspect of the present invention;
FIG. 2A is a perspective view schematically depicting a front side of a cutting blade in the cutting machine of FIG. 1;
FIG. 2B is a plan view schematically depicting a back side of the cutting blade in the cutting machine of FIG. 1;
FIG. 3 is a perspective view schematically depicting a cutting unit and a reader in the cutting machine of FIG. 1;
FIG. 4 is a cross-sectional view schematically depicting the reader that is reading an identification code applied to the cutting blade;
FIG. 5 is a cross-sectional view schematically depicting an example of the reader that is in use to detect a lower edge position of a grindstone portion of the cutting blade; and
FIG. 6 is a cross-sectional view schematically depicting another example of the reader that is in use to detect the lower edge position of the grindstone portion of the cutting blade.

### DETAILED DESCRIPTION OF THE PREFERRED EMBODIMENTS

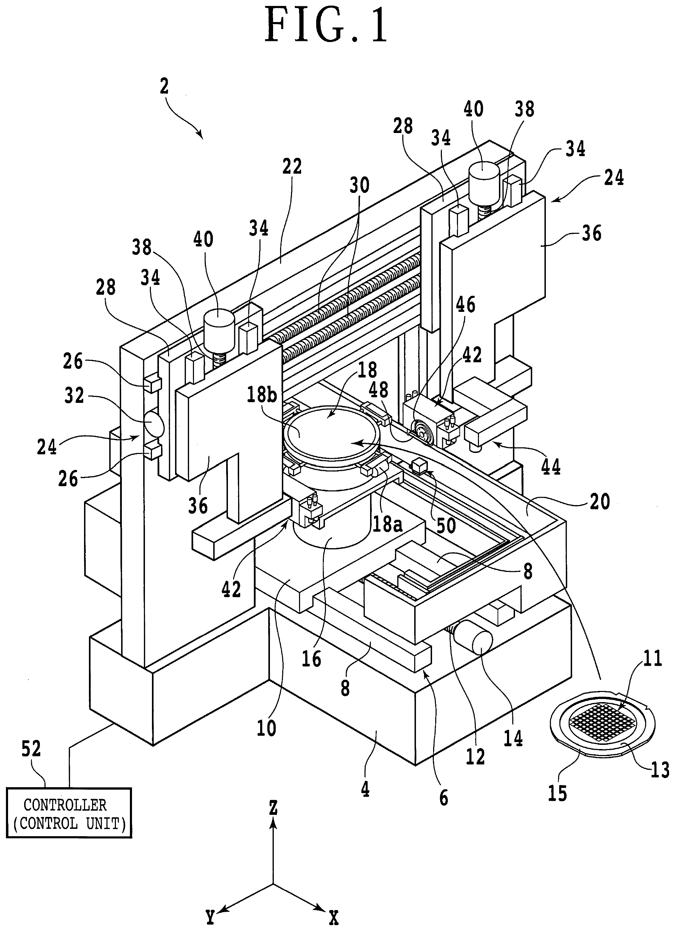

With reference to the attached drawings, a description will be made about embodiments of the first to third aspects of the present invention. FIG. 1 is a perspective view schematically depicting a cutting machine 2 according to the embodiment of the first aspect of the present invention. Referring to FIG. 1, the cutting machine 2 according to this embodiment will first be described. The cutting machine 2 depicted in FIG. 1 is useful in cutting a workpiece 11, such as a substantially disk-shaped substrate, made from a material such as silicon, silicon carbide (SiC), or gallium arsenide (GaAs), or another semiconductor, or a material such as sapphire, glass, or quartz. On a front surface of the workpiece 11, a plurality of devices such as integrated circuits (ICs) is formed. The workpiece 11 is finally divided into the individual devices, whereby individual device chips are formed. For example, the workpiece 11 to be loaded onto the cutting machine 2 is adhered beforehand to a tape 13 applied to an annular frame 15 such that an opening of the frame 15 is closed. The workpiece 11 is then cut in this state. If the workpiece 11 is appropriately cut, a cutting blade which will be described subsequently herein reaches the tape 13 at a cutting edge of its grindstone portion, but the tape 13 is not cut off completely.

As depicted in FIG. 1, the cutting machine 2 includes a machine bed 4 that supports individual elements. On a central upper section of the machine bed 4, an X-axis moving table 10, an X-axis moving mechanism 6, and a drain trough 20 are disposed. The X-axis moving mechanism 6 moves the X-axis moving table 10 in an X-axis direction (processing feed direction), and the drain trough 20 covers the X-axis moving mechanism 6. The X-axis moving mechanism 6 includes a pair of X-axis guide rails 8 in parallel with the X-axis direction, and the X-axis moving table 10 is slidably attached to the X-axis guide rails 8. On a side of a lower surface of the X-axis moving table 10, a nut portion (not depicted) is disposed. An X-axis ball screw 12 is arranged in parallel with the X-axis guide rails 8, and is in threaded engagement with the nut portion. To one end portion of the X-axis ball screw 12, an X-axis pulse motor 14 is connected. When the X-axis ball screw 12 is rotated by the X-axis pulse motor 14, the X-axis moving table 10 is moved in the X-axis direction along the X-axis guide rails 8.

On the X-axis moving table 10, a chuck table 18 is disposed via a table base 16 to hold the workpiece 11 under suction. The chuck table 18 is connected to a rotary drive source (not depicted) such as a motor, and is rotatable about an axis of rotation that is perpendicular to an upper surface of the chuck table 18. Further, the chuck table 18 is fed in the X-axis direction by the above-mentioned X-axis moving mechanism 6. The surface (upper surface) of the chuck table 18 serves as a holding surface 18b that holds the workpiece 11 under suction. The holding surface 18b is connected to a suction source (not depicted) via a flow channel (not depicted) formed inside the chuck table 18. Around the holding surface 18b, clamps 18a are arranged to hold the annular frame 15 with the workpiece 11 held thereon via the tape 13.

On an upper surface of the machine bed 4, a support structure 22, with two cutting units 42 supported thereon to cut the workpiece 11, is arranged such that the support structure 22 extends astride the X-axis moving mechanism 6. On an upper part of a forward surface of the support structure 22, moving units 24 are disposed to move the two cutting units 42 in a Y-axis direction (indexing feed direction) and a Z-axis direction (cutting-in feed direction), respectively.

On the forward surface of the support structure 22, a pair of Y-axis guide rails 26 is disposed in parallel with the Y-axis direction. To the Y-axis guide rails 26, two Y-axis moving plates 28 are slidably attached corresponding to the respective ones of the cutting units 42. On a side of a back surface (on a side of a backward surface) of each Y-axis moving plate 28, a nut portion (not depicted) is disposed. A Y-axis ball screw 30 is arranged in parallel with the Y-axis guide rails 26, and is in threaded engagement with the nut portion. To one end portion of the Y-axis ball screw 30, a Y-axis pulse motor 32 is connected. When the Y-axis ball screw 30 is rotated by the Y-axis pulse motor 32, the corresponding Y-axis moving plate 28 is moved in the Y-axis direction along the Y-axis guide rails 26. Therefore, the Y-axis guide rails 26, the Y-axis moving plate 28, the Y-axis ball screw 30, and the Y-axis pulse motor 32 make up an indexing feed unit.

On a front surface (forward surface) of each Y-axis moving plate 28, a pair of Z-axis guide rails 34 is slidably disposed in parallel with the Z-axis direction. To the respective Z-axis guide rails 34, a Z-axis moving plate 36 is slidably attached. On a side of a back surface (on a side of a backward surface) of the Z-axis moving plate 36, a nut portion (not depicted) is disposed. A Z-axis ball screw 38 is arranged in parallel with the Z-axis guide rails 34, and is in threaded engagement with the nut portion. To one end portion of the Z-axis ball screw 38, a Z-axis pulse motor 40 is connected. When the Z-axis ball screw 38 is rotated by the Z-axis pulse motor 40, the Z-axis moving plate 36 is moved in the Z-axis direction (cutting-in feed direction) along the Z-axis guide rails 34. Therefore, the Z-axis guide rails 34, the Z-axis moving plate 36, the Z-axis ball screw 38, and the Z-axis pulse motor 40 make up a cutting-in feed unit. The moving units 24 each include the indexing feed unit and the cutting-in feed unit.

On a lower portion of each of the two Z-axis moving plates 36, the cutting unit 42 and an imaging unit (camera) 44 are fixed. The cutting unit 42 cuts the workpiece 11 held on the chuck table 18, and the imaging unit (camera) 44 can image the workpiece 11. When each Y-axis moving plate 28 is moved in the Y-axis direction, the corresponding cutting unit 42 and imaging unit 44 are also moved in the Y-axis direction (indexing feed direction). When each Z-axis moving plate 36 is moved in the Z-axis direction, the corresponding cutting unit 42 and imaging unit 44 are also moved in the Z-axis direction (cutting-in feed direction).

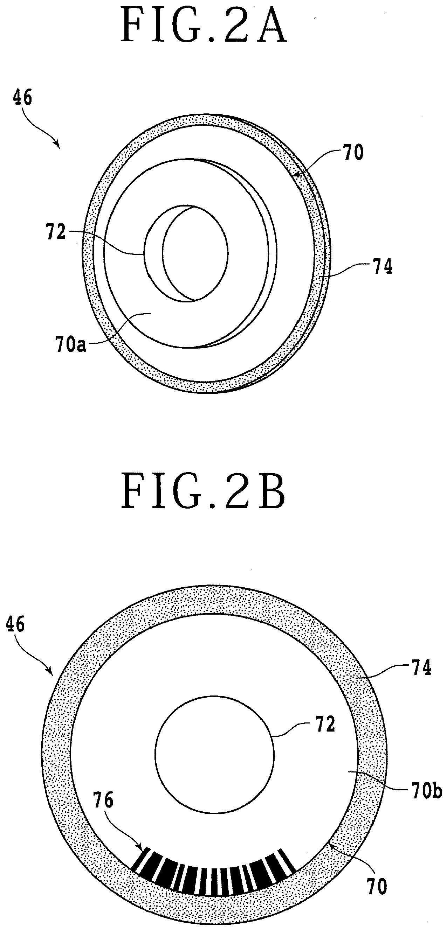

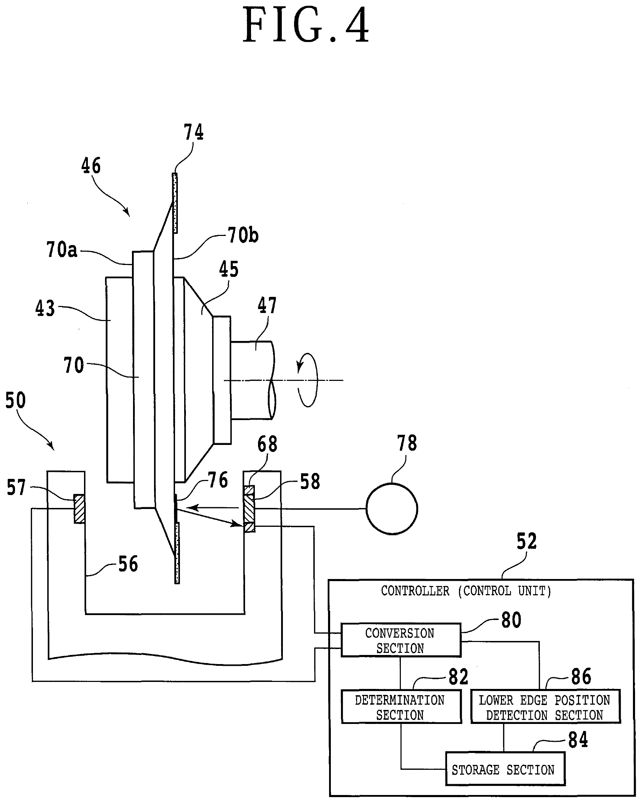

Each cutting unit 42 includes a spindle 47 (see FIG. 4) along the Y-axis direction, a direction parallel to the holding surface 18b of the chuck table 18, and a rotary drive source (not depicted), such as a motor, connected to a side of a proximal end of the spindle 47. On a distal end of the spindle 47, a cutting blade 46 with an annular grindstone portion 74 (see FIG. 2A and other figures) included therein is to be mounted.

FIG. 2A is a perspective view schematically depicting a front side of the cutting blade 46. On the other hand, FIG. 2B is a plan view schematically depicting a back side of the cutting blade 46. In FIG. 4, a side view which schematically depicts the cutting blade 46 fixed on the distal end of the spindle 47 is schematically illustrated. The cutting blade 46 has a disk-shaped hub 70 formed from metal such as aluminum. In a central portion of the hub 70, a substantially circular mounting hole 72 is disposed extending through the hub 70. On an outer periphery of the hub 70, the grindstone portion 74 is fixed. The grindstone portion 74 contains abrasive grits of diamond or the like, and a bonding material in which the abrasive grits are dispersed and fixed. The bonding material is composed of, for example, metal, resin, or the like.

On the distal end of the spindle 47, a blade mounting mechanism 45 is fixed, which supports the cutting blade 46 from a side of a back surface 70b. The blade mounting mechanism 45 centrally includes a cylindrical boss portion (not depicted), and also includes a flange portion around the boss portion on a side of a proximal end thereof. When the cutting blade 46 is mounted on the cutting unit 42, the boss portion of the blade mounting mechanism 45 mounted on the distal end of the spindle 47 is inserted into the mounting hole 72. A fixing nut 43 is then fastened on a distal end of the boss portion, whereby the cutting blade 46 is held and fixed between the fixing nut 43 and the blade mounting mechanism 45. When the rotary drive source connected to the spindle 47 is operated to rotate the spindle 47, the cutting blade 46 rotates around an axis of rotation of the spindle 47.

When the workpiece 11 is cut, the positions of scribe lines set on the front surface of the workpiece 11 are recognized beforehand through detection of devices, patterns, and the like formed on the front surface of the workpiece 11, by the imaging unit 44. The chuck table 18 is next rotated such that the extending direction of the scribe lines conforms to the processing feed direction of the cutting machine 2. The moving unit 24 is then operated to position the cutting blade 46 above an extension of a desired one of the scribe lines of the workpiece 11.

The cutting blade 46 is then rotated, and, at the same time, the cutting unit 42 is adjusted in height so that the grindstone portion 74 of the cutting blade 46 assumes at a lower edge thereof a height position lower than a back surface (lower surface) of the workpiece 11. The cutting-in feed unit that includes the Z-axis pulse motor 40 further includes a position recognition unit (not depicted) that recognizes, for example, a position of the cutting unit 42 in the cutting-in feed direction. Using the position recognition unit with a scale or the like included therein, the cutting machine 2 positions the cutting unit 42 at a predetermined height position.

A processing feed unit is then operated to move the chuck table 18 in the processing feed direction and to feed it for processing, so that the cutting blade 46 is caused to cut into the workpiece 11 to cut the workpiece 11. After the workpiece 11 has been cut along the desired one scribe line, the indexing feed unit is operated to feed the cutting unit 42 for indexing. After that, the chuck table 18 is again fed for processing, so that the workpiece 11 is cut along another one of the scribe lines. In the manner as described above, the cutting machine 2 cuts the workpiece 11 along each scribe line, one after another.

The cutting unit 42 includes a cutting water supply nozzle 48, which supplies cutting water such as pure water to the workpiece 11 held on the chuck table 18 and also to the cutting blade 46. When the workpiece 11 is cut by the cutting blade 46, friction heat is generated between the workpiece 11 and the cutting edge of the cutting blade 46. Cutting debris is also produced from the workpiece 11 and the cutting blade 46. If cutting water is supplied to the workpiece 11 and the cutting blade 46 during the cutting of the workpiece 11, friction heat and cutting debris can be removed.

As depicted in FIG. 1, the cutting machine 2 further includes a controller (control unit) 52. The controller 52 has functions to control individual elements of the cutting machine 2, such as the cutting unit 42, the chuck table 18, the individual moving mechanisms, the imaging unit 44, and a detection unit (reader) 50 which will be mentioned subsequently herein. These functions of the controller 52 are realized as software for a machine control computer. Specifically, the controller 52 is configured by a computer that includes a processor such as a central processing unit (CPU) and a storage section such as a flash memory. By operating the processor through software such as programs stored in the storage section, the controller 52 functions as specific means in which the software and the processor (hardware resource) cooperate together.

With the cutting machine 2, a wide variety of workpieces 11 are processed for various purposes. There are also a wide variety of types of cutting blades 46, and the cutting blade 46 of the type suited for the workpiece 11 and processing purpose is selected and mounted on the cutting unit 42. In the controller (control unit) 52, information (type information) on the type of the mounted cutting blade 46 is recorded. The controller 52 of the cutting machine 2 then operates the individual elements under conditions suited for the type of the mounted cutting blade 46, and cuts the workpiece 11 under optimal conditions. The work to input the type information of the cutting blade 46 in the controller 52 has heretofore been manually performed by an operator (worker). In this manner, however, the operator may input incorrect information by mistake, so that the type information of the cutting blade 46 may not be correctly inputted in the controller 52. If this is the case, the controller 52 operates the individual elements under improper conditions to cut the workpiece 11 by the cutting blade 46, and hence a problem arises in that processing results of predetermined quality are not available.

A method has therefore been developed, in which an identification code (barcode, two-dimensional code, or the like), indicative of type information, ID information, a serial number, and the like, is applied to the cutting blade 46, and in addition a reader for the identification code is disposed on an outer surface of the cutting machine 2. In FIG. 2B, an identification code (barcode) 76 disposed on the back surface 70b of the hub 70 of the cutting blade 46 is schematically depicted. By allowing the reader to read the identification code 76 when the cutting blade 46 with the identification code 76 applied thereto is mounted on the cutting unit 42, the type information of the cutting blade 46 can be automatically recorded in the controller 52. Instead of the cutting blade 46, the identification code 76 may also be applied to a blade case in which the cutting blade 46 is placed. In this case, by allowing the reader to read the identification code 76 when the cutting blade 46, which is placed in the blade case, is taken out of the blade case and is mounted on the cutting unit 42, the type information of the cutting blade 46 can be automatically recorded in the controller 52.

After allowing the reader to read the identification code 76, a different cutting blade 46 may however be mounted in error on the cutting unit 42. Further, a cutting blade 46 of a different type, which should not be placed in the blade case as a matter of fact, may be placed in the blade case. Even in these cases, the cutting of the workpiece 11 will be performed under conditions suited for the cutting blade 46 of the type indicated by the identification code 76. The cutting of the workpiece 11 will be performed under conditions unsuited for the cutting blade 46 actually mounted on the cutting unit 42. Hence, the cutting machine 2 according to this embodiment reads the identification code 76 applied to the cutting blade 46 mounted on the cutting unit 42, and automatically acquires the identification information of the cutting blade 46. The description of the cutting machine 2 will hereinafter be continued centering around the configuration of the reader for the identification code 76 applied to the cutting blade 46.

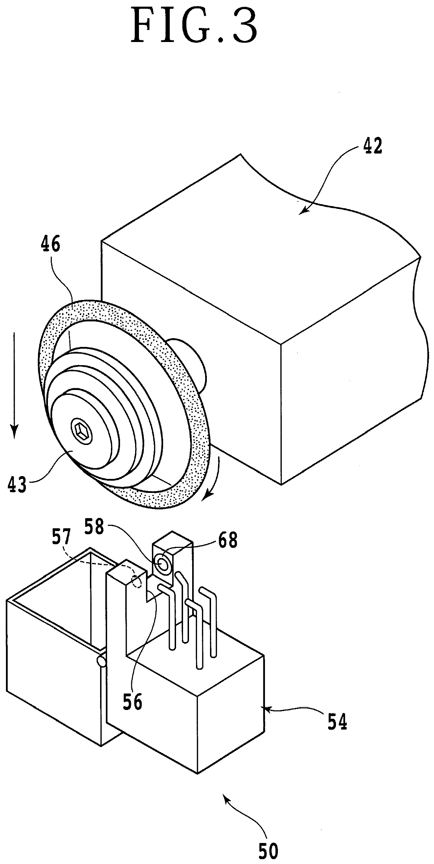

FIG. 3 illustrates a perspective view that schematically depicts the detection unit 50, and FIG. 4 presents a side view that schematically depicts the detection unit 50. In a base (main body) 54 of the detection unit 50, an upwardly open blade entry indentation 56 is disposed. When the detection unit 50 is used, the cutting blade 46 is positioned above the blade entry indentation 56, the cutting-in feed unit is operated to lower the cutting blade 46, and the cutting blade 46 is then caused to enter into the blade entry indentation 56.

In one of opposite side walls of the blade entry indentation 56, a light-emitting unit 58 is disposed to generate light and to apply the light toward the cutting blade 46 that is entering into the blade entry indentation 56. For example, the light-emitting unit 58 is a light-emitting window connected to a light source 78 such as a light emitting diode (LED) via an optical fiber, and applies light, which has been generated at the light source 78, toward the cutting blade 46. In the same one side wall of the blade entry indentation 56, a light-receiving unit 68 is also disposed to receive the light reflected by the cutting blade 46. The light-receiving unit 68 includes, for example, a light-receiving window surrounding the light-emitting window of the light-emitting unit 58, and an undepicted light sensor that detects the light that has reached the light-receiving window. The light sensor includes photodiodes. Examples of the photodiodes include, but are not limited to, a complementary metal-oxide-semiconductor (CMOS) sensor, a charge coupled device (CCD) sensor, and the like. This light sensor is incorporated, for example, in the base 54 of the detection unit 50. As an alternative, the light sensor may be disposed outside of the base 54, and may be connected to the light-receiving window via an optical fiber. The light sensor in the light-receiving unit 68 is connected to the controller 52, and sends electrical signals, which correspond to the intensities of the received light, to the controller 52. For example, the electrical signals based on the light received at the light-receiving unit 68 each have an analog waveform.

For example, the identification code 76 applied to the cutting blade 46 is a barcode composed of a plurality of bars arrayed along a peripheral direction of the cutting blade 46 as depicted in FIG. 2B. In this case, light is reflected relatively weakly at the respective bars that make up the identification code 76, but is reflected strongly between the respective bars. The profile of the identification code 76 is therefore reflected to the light reflected from the cutting blade 46. Specifically, if the light applied to the rotating cutting blade 46 and reflected by the cutting blade 46 is observed at the light-receiving unit 68, the intensity of the observed light is low when the light hits each bar, but is high when the light does not hit any bar. If the cutting blade 46 is rotating at a constant speed, the profile of the barcode is therefore reflected as it is to time-dependent variations of the intensity of the light received at the light-receiving unit 68. It is thus possible to determine the profile of the barcode from the light received at the light-receiving unit 68.

Especially if the identification code 76 is a barcode, the respective bars that make up the barcode are preferably in the form of short radial line segments centering around a rotational center of the cutting blade 46. If this is the case, the profile of the barcode is similarly reflected to the time-dependent variations of the intensity of the light received at the light-receiving unit 68, regardless of which height the cutting blade 46 is positioned at, insofar as the light emitted from the light-emitting unit 58 hits the identification code 76.

The controller 52 includes a conversion section 80 that converts the electrical signals, which have been sent from the light-receiving unit 68, to digital signals to read the identification code 76 and to acquire the information of the identification code 76. In other words, the controller 52 generates digital signals on the basis of the light received at the light-receiving unit 68, and reads the identification code 76 on the basis of the digital signals. As information (type information) on the type of the cutting blade 46 mounted on the cutting unit 42 is stored in the identification code 76, the conversion section 80 acquires the type information of the cutting blade 46 by reading the identification code 76.

It is to be noted that, as will be mentioned subsequently herein, a lower edge position of the grindstone portion 74 of the cutting blade 46 may be detected at the detection unit 50 when the identification code 76 is read. In this case, the cutting blade 46 that is entering into the blade entry indentation 56 of the detection unit 50 is desirably rotating at a rotational speed similar to when the workpiece 11 is cut. For example, the cutting blade 46 rotates at a rotational speed of approximately 30,000 revolutions per minute when the workpiece 11 is cut. The identification code 76 hence comes to face the light-receiving unit 68 at every time equivalent to the reciprocal of the rotational speed. The controller 52 therefore generates digital signals by sampling the electrical signals sent from the light-receiving unit 68 at a sampling frequency corresponding to the rotational speed at which the cutting unit 42 rotates the cutting blade 46 when the workpiece 11 is cut. However, the sampling frequency may be appropriately set as needed within a range in which appropriate reading of the identification code 76 is possible.

Here, the actual rotational speed of the cutting blade 46 that is rotating when the identification code 76 is detected with the detection unit 50 is determined by actual measurement. Inside a region in which the identification code 76 is applied or adjacent to the identification code 76, for example, a dedicated mark (symbol, figure, pattern, characters, or the like) is applied beforehand to the cutting blade 46. By detecting this mark with the detection unit 50, the rotational speed of the cutting blade 46 is calculated on the basis of its response time, detection cycle, or the like.

The controller 52 includes a storage section 84 that stores a variety of information and can supply the stored information as required. For example, programs for controlling the individual elements of the cutting machine 2, operation details and conditions for the individual elements, and the like are stored in the storage section 84. The storage section 84 also stores the types of various workpieces 11 that can be cut by the cutting machine 2, and further stores conditions and the like for cutting that can be performed on the various workpieces 11. In addition, the storage section 84 also stores the type information of the cutting blade 46 mounted on the cutting unit 42. A user of the cutting machine 2 selects cutting conditions for the workpiece 11 when the workpiece 11 is loaded onto the cutting machine 2. For example, the user selects an appropriate set of cutting conditions out of a plurality of different sets of cutting conditions stored in the storage section 84, and reads this set of cutting conditions from the storage section 84. As an alternative, the user sets the respective items of operation details of the individual elements of the cutting machine 2, and records such set items together with the types of the workpieces 11 and the types of cutting blades 46 which are suited for cutting these workpieces 11, as new cutting conditions in the storage section 84.

The controller 52 may also have a determination section 82 that determines, on the basis of the type information of the cutting blade 46 as acquired from the identification code 76, whether or not the cutting blade 46 is suited for cutting the workpiece 11. In other words, the controller 52 may determine, on the basis of the identification information of the cutting blade 46, whether or not the cutting blade 46 is suited for cutting the workpiece 11.

For example, when the workpiece 11 is cut by the cutting machine 2, the type of the workpiece 11 to be loaded and the conditions and the like for the cutting to be performed on the workpiece 11 are recorded in the storage section 84, or are read from the storage section 84, at the controller 52. At this time, the type of the cutting blade 46 which should be used in the cutting of the workpiece 11 is stored in the storage section 84, or is read from the storage section 84. The determination section 82 of the controller 52 then collates the type information of the cutting blade 46 as acquired from the identification code 76 and the type information of the cutting blade 46 to be used in the cutting of the workpiece 11. If both of them match each other, the cutting blade 46 mounted on the cutting unit 42 is then determined to be suited. If both of them do not match each other, on the other hand, the cutting blade 46 mounted on the cutting unit 42 is then determined to be unsuited.

If the mounting of the cutting blade 46 of the appropriate type on the cutting unit 42 is confirmed, a setup step that will be mentioned subsequently herein is performed and is ready for cutting the workpiece 11, and the workpiece 11 held on the chuck table 18 is cut by the cutting blade 46. If the mounting of the cutting blade 46 of the inappropriate type on the cutting unit 42 is confirmed, on the other hand, the cutting machine 2 does not perform the cutting of the workpiece 11. This prevents the cutting of the workpiece 11 by the inappropriate cutting blade 46, so that damage to the workpiece 11 and cutting machine 2 is suppressed. If the inappropriate cutting blade 46 is mounted on the cutting unit 42, the cutting machine 2 may also issue an alarm to notify the user of that effect. If the cutting machine 2 includes a display panel, for example, an alarm screen is displayed on the display panel. If the cutting machine 2 includes an alarm buzzer, on the other hand, the alarm buzzer is triggered to generate an alarm sound. The user of the cutting machine 2, who has become aware of the alarm, can check the type of the cutting blade 46, can dismount the cutting blade 46 of the inappropriate type, and can then mount the cutting blade 46 of the appropriate type.

A description will next be made about operation of the cutting machine 2 when the identification code 76 is read, which is applied to the cutting blade 46, by the detection unit 50. FIG. 4 is a cross-sectional view schematically depicting the detection unit 50 that is reading the identification code 76. In FIG. 4, hatching that should be applied to a cross-sectional portion of the detection unit 50 is omitted in part for the sake of convenience of description.

The cutting unit 42 is first moved such that the cutting blade 46 is positioned above the detection unit 50. After that, the spindle 47 is rotated to rotationally drive the cutting blade 46. Subsequently, the cutting unit 42 is lowered to cause the grindstone portion 74 of the cutting blade 46 to enter into the blade entry indentation 56. When the cutting blade 46 has then reached a predetermined height and the identification code 76 applied to the rotating cutting blade 46 periodically comes to face the light-emitting unit 58 and the light-receiving unit 68, the lowering of the cutting unit 42 is stopped.

The light source 78 of the light-emitting unit 58 is next operated to apply light toward the back surface 70b of the hub 70 of the cutting blade 46. The light applied to the hub 70 of the cutting blade 46 is reflected and reaches the light-receiving unit 68. The light-receiving unit 68 receives the light, convert it into electrical signals, and send them to the controller 52. At the controller 52, the conversion section 80 reads the identification code 76 on the basis of the electrical signals, and acquires the type information of the cutting blade 46 as indicated by the identification code 76. The conversion section 80 sends the read type information of the cutting blade 46 to the storage section 84. The controller 52 of the cutting machine 2 therefore acquires the type information of the cutting blade 46 by reading the identification code 76 on the basis of the light generated at the light-emitting unit 58, applied to the identification code 76 applied to the cutting blade 46, reflected by the cutting blade 46, and received at the light-receiving unit 68. The controller 52 then stores the acquired type information of the cutting blade 46 in the storage section 84. Further, the determination section 82 collates the type information of the cutting blade 46 as indicated by the identification code 76 and the type of the cutting blade 46 that should be used in the cutting of the workpiece 11, and determines whether or not the cutting blade 46 mounted on the cutting unit 42 is suited.

It is to be noted that, in the cutting machine 2 according to this embodiment, the setup step for the cutting unit 42 may be performed by the detection unit 50 which is used as the reader for the identification code 76. In order to cut the workpiece 11 with sufficient quality, there is a need to adjust the height of the cutting unit 42 such that the grindstone portion 74 of the cutting blade 46 reaches, at a lower edge thereof, a height position lower than the lower surface of the workpiece 11. Shortly after the mounting of the cutting blade 46 on the cutting unit 42, however, there are variations in the distance of an outer periphery of the grindstone portion 74 from the rotational center of the cutting blade 46, so that this distance is not constant. Further, if cutting with the cutting blade 46 is repeatedly performed on a plurality of workpieces 11, the grindstone portion 74 of the cutting blade 46 is gradually worn off, and the cutting blade 46 gradually decreases in diameter. The setup step is therefore repeatedly performed at predetermined timings such that the lower edge of the grindstone portion 74 of the cutting blade 46 is positioned at the height position lower than the back surface (lower surface) of each workpiece 11. In the setup step, the height position of the cutting unit 42 at the moment that the height of the lower edge of the grindstone portion 74 of the cutting blade 46 is positioned at the height position lower than the back surface (lower surface) of the workpiece 11 is detected as a height position suited for the cutting.

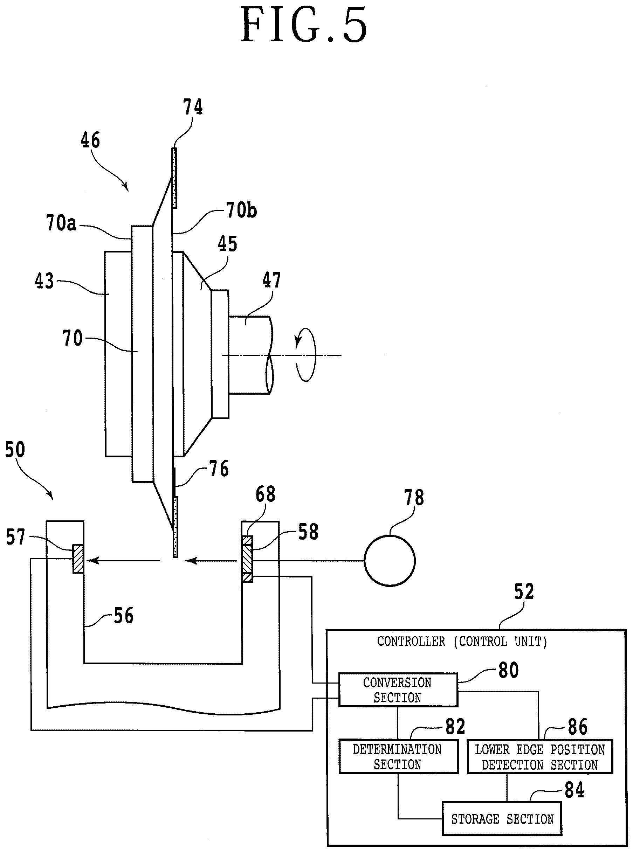

In FIGS. 4 and 5, cross-sectional views of the detection unit 50 for use in the setup step are schematically illustrated. The detection unit 50 further includes a second light-receiving unit 57 disposed in the other side wall on the side opposite to the one side wall, in which the light-emitting unit 58 is disposed, of the blade entry indentation 56 of the base 54. In particular, the second light-receiving unit 57 is disposed at a position opposite to the light-emitting unit 58. In other words, the light-emitting unit 58 and the second light-receiving unit 57 face each other with the blade entry indentation 56 interposed therebetween. The second light-receiving unit 57 is configured similarly to the light-receiving unit 68. The second light-receiving unit 57 receives the light generated at the light-emitting unit 58, generates electrical signals, and sends the electrical signals to the controller 52. In FIG. 5, the detection unit 50 is performing the setup step. In FIG. 5, hatching that should be applied to the cross-sectional portion of the detection unit 50 is omitted in part for the sake of convenience of description. The controller 52 has a lower edge position detection section 86. The lower edge position detection section 86 of the controller 52 detects the lower edge position (the height position of the lower edge) of the grindstone portion 74 of the cutting blade 46 on the basis of a transmission amount of the light generated at the light-emitting unit 58 and received at the second light-receiving unit 57 with or without being partly blocked by the grindstone portion 74 of the cutting blade 46.

When the setup step is actually performed, the identification code 76 of the cutting blade 46 is read by the detection unit 50, and then the cutting unit 42 is once raised to cause the rotating cutting blade 46 to retreat out of the blade entry indentation 56. After that, the light-emitting unit 58 is operated to continuously apply the light toward the second light-receiving unit 57. In this state, the cutting blade 46 is lowered toward the blade entry indentation 56.

When the cutting blade 46 is progressively lowered, the light emitted from the light-emitting unit 58 begins to hit the grindstone portion 74 of the cutting blade 46. The light is then gradually blocked by the grindstone portion 74 of the cutting blade 46, so that the amount (intensity) of the light received at the second light-receiving unit 57 gradually decreases. As the amount of the light to be received at the second light-receiving unit 57 is determined by the height position of the lower edge of the grindstone portion 74, the height position of the lower edge of the grindstone portion 74 can be specified on the basis of this amount of the light received. The height position of the cutting unit 42 at the moment that the amount of the light received at the second light-receiving unit 57 has decreased to a reference amount of received light, which enables to verify the reach of the lower edge of the grindstone portion 74 to the predetermined height position, is detected as a reference height position. The detected reference height position of the cutting unit 42 may be stored in the storage section 84. A height position, at which the cutting unit 42 should be positioned when the workpiece 11 is cut, is then calculated on the basis of the reference height position.

It is to be noted that a setup step such as that described above may preferably be performed while rotating the cutting blade 46 about the axis of rotation of the spindle 47. For example, the rotational speed of the cutting blade 46 may be set to match the rotational speed of the cutting blade 46 when the cutting of the workpiece 11 is performed, because when the cutting blade 46 is rotated at a high speed, a centrifugal force acts on the cutting blade 46 and the diameter of the cutting blade 46 increases. If the rotational speed of the cutting blade 46 is set twice, first when the setup step is performed, and then again when the workpiece 11 is cut, as described above, influence by the centrifugal force can be offset. When the identification code 76 is read by the detection unit 50 before the setup step, the cutting blade 46 may also be rotating at the same rotational speed as the cutting is performed. This enables to smoothly perform the setup step.

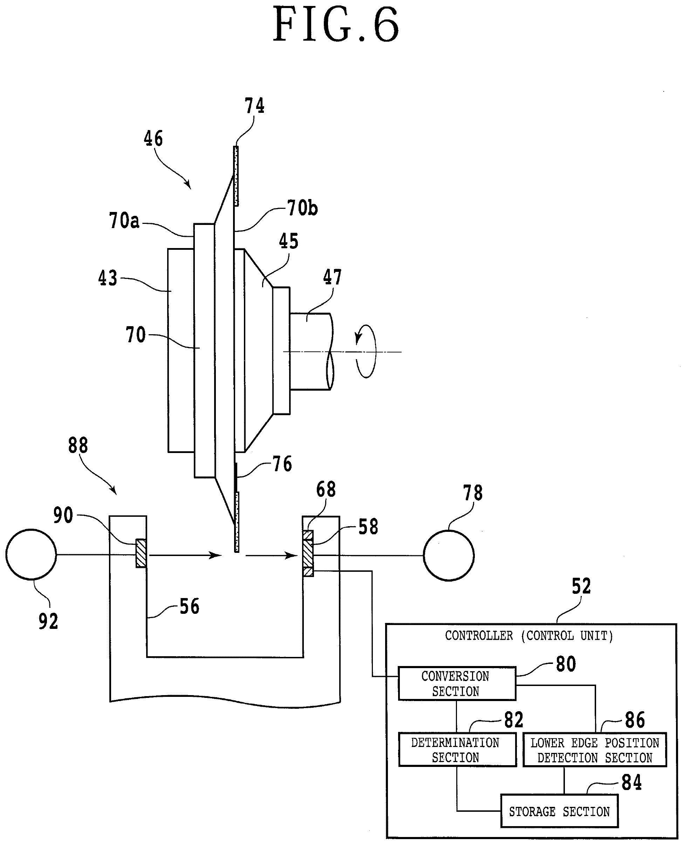

It is to be noted that, in the cutting machine 2 according to this embodiment, the detection unit 50 which is also usable in the setup step is not limited to the foregoing. Specifically, the detection unit 50 may exclude the second light-receiving unit 57 that faces the light-emitting unit 58. FIG. 6 is a concept diagram schematically depicting how the setup step is performed by a detection unit 88 of a modification. In FIG. 6, a cross-sectional view that schematically depicts the detection unit 88 of the modification, the detection unit 88 being capable of performing the setup step, is illustrated. In FIG. 6, hatching that should be applied to a cross-sectional portion of the detection unit 88 is also omitted in part for the sake of convenience of description. About those which are not different from the corresponding elements in the above-mentioned detection unit 50, their description is omitted.

The detection unit 88 further includes a second light-emitting unit 90 disposed in the other side wall on the side opposite to the one side wall, in which the light-receiving unit 68 is disposed, of the blade entry indentation 56 of the base 54. In particular, the second light-emitting unit 90 is disposed at a position opposite to the light-receiving unit 68, and therefore can apply light toward the facing light-receiving unit 68. In other words, the light-receiving unit 68 and the second light-emitting unit 90 face each other with the blade entry indentation 56 interposed therebetween. The second light-emitting unit 90 is configured similarly to the light-emitting unit 58. Specifically, the second light-emitting unit 90 therefore includes a light source 92 arranged inside or outside of the base 54 of the detection unit 88. For example, the second light-emitting unit 90 is a light-emitting window connected to the light source 92 such as an LED via an optical fiber, and applies light, which has been generated at the light source 92, toward the cutting blade 46. The light emitted from the second light-emitting unit 90 is received at the light-receiving unit 68.

The lower edge position detection section 86 of the controller 52 detects the lower edge position (the height position of the lower edge) of the grindstone portion 74 of the cutting blade 46 on the basis of a transmission amount of the light generated at the second light-emitting unit 90 and received at the light-receiving unit 68 with or without being partly blocked by the grindstone portion 74 of the cutting blade 46. About a setup step that uses the detection unit 88, its description is omitted because its procedures are similar to those of the above-mentioned setup step that uses the detection unit 50.

As described above, the cutting machine 2 can perform the reading of the identification code 76 applied to the cutting blade 46 and the setup step by the detection unit 50 or 88 including at least two units, each being one of a light-emitting unit or light-receiving unit, and at least one of the other of the light-emitting unit or light-receiving unit. Accordingly, it is unnecessary for the cutting machine 2 to include both a dedicated detection unit for performing the setup step and a dedicated reader for use in reading the identification code 76, and the cutting machine 2 according to this embodiment can hence be realized with a simple configuration and at relatively low cost.

As described above, with the cutting machine 2 according to this embodiment, the identification code 76 applied to the mounted cutting blade 46 can be read, so that the type information of the cutting blade 46 can be reliably and easily acquired. Differently from the case where the cutting blade 46 is mounted on the cutting unit 42 after reading the identification code 76 of the cutting blade 46, the identification code 76 applied to the cutting blade 46 mounted on the cutting unit 42 can be read. It is therefore possible to avoid cutting the workpiece 11 with any cutting blade 46 unsuited for cutting the workpiece 11.

The cutting machine 2 according to this embodiment is also advantageous even in cases where no determination is made as to whether or not the mounted cutting blade 46 is suited. For example, the cutting machine 2 can easily record the type information and ID information of the cutting blade 46, which is to be used in processing, as log information in the storage section 84 of the controller 52. The type information or the like of the cutting blade 46 can therefore be easily recorded in the storage section 84 without troubling an operator or the like to input or otherwise provide the type information or the like of the cutting blade 46 by himself or herself, or without needing the operator to perform work to read the identification code 76. Moreover, there is no need to dispose a reader or the like on a housing of the cutting machine 2 for use in reading the identification code 76.

In the above-described embodiment, the description is made about the case where the identification code 76 applied to the cutting blade 46, which is rotating at a high speed, is read by the detection unit 50 or 88 that can also be used in the setup step. One aspect of the present invention is however not limited to such a case. The detection unit 50 or 88, which functions as a reader, may not have the function to detect the height position of the lower edge of the grindstone portion 74 of the cutting blade 46 in the setup step. In other words, the cutting machine 2 may also include, in addition to the detection unit 50 or 88, a unit having the above-mentioned function that is used in the setup step.

Further, the detection unit 50 or 88 that functions as a reader is not needed to be assembled in the cutting machine 2, and may be independent from the cutting machine 2. The detection unit 50 or 88 that is independent as a reader may be able to read an identification code other than the identification code 76 applied to the cutting blade 46. The identification code to be read may be applied to a mobile body that moves, or a rotary body that rotates. The readers according to the second and third aspects of the present invention therefore read an identification code applied to the mobile body which is moving, and an identification code applied to the rotary body which is rotating, respectively.

For example, the reader according to the third aspect of the present invention is a reader for reading an identification code, which indicates type information, of a rotary body having the identification code applied thereto. The reader includes a light-emitting unit that emits light toward the identification code of the rotary body which is rotating, and a light-receiving unit that receives the light reflected by the identification code. This reader also includes a photoelectric conversion section that converts amounts of the light, which have been received at the light-receiving unit, to electrical signals, and a digital conversion section that converts the electrical signals of the light, which have been converted from the amounts of the light at the photoelectric conversion section, to digital signals. The digital conversion section acquires the type information of the rotary body from the digital signals. For example, the reader according to the second aspect of the present invention is a reader for reading an identification code, which indicates type information, of a mobile body having the identification code applied thereto. The reader includes a light-emitting unit that emits light toward the identification code of the mobile body which is moving, and a light-receiving unit that receives the light reflected by the identification code. This reader also includes a photoelectric conversion section that converts amounts of the light, which have been received at the light-receiving unit, to electrical signals, and a digital conversion section that converts the electrical signals of the light, which have been converted from the amounts of the light at the photoelectric conversion section, to digital signals. The digital conversion section acquires the type information of the mobile body from the digital signals.

The light-emitting unit of each reader is configured similarly to the above-described light-emitting unit 58 of the detection unit 50, and the light-receiving unit of each reader is configured similarly to the above-described light-receiving unit 68 of the detection unit 50. Further, each reader includes a controller (control unit) configured similarly to the above-mentioned controller 52 of the cutting machine 2, and the functions of the photoelectric conversion section and digital conversion section are realized by the controller. As descriptions of these photoelectric conversion section and digital conversion section, the description of the above-mentioned controller 52 may therefore be referred to as needed.

The present invention is not limited to the details of the above described preferred embodiment. The scope of the invention is defined by the appended claims and all changes and modifications as fall within the equivalence of the scope of the claims are therefore to be embraced by the invention.

## Claims

1. A cutting machine comprising:
a cutting unit capable of mounting thereon a cutting blade including an annular grindstone portion and applied on an outer surface thereof with an identification code that indicates type information of the cutting blade, and capable of cutting a workpiece with the grindstone portion by rotating the cutting blade;
a chuck table that holds the workpiece to be cut by the cutting unit;
a detection unit; and
a controller that controls the cutting unit, the chuck table, and the detection unit, wherein
the detection unit includes
a base with a blade entry indentation formed therein to permit entry of the cutting blade,
a light-emitting unit disposed in one of opposite side walls of the blade entry indentation of the base to generate light and to apply the light toward the cutting blade entering into the blade entry indentation, and
a light-receiving unit disposed in the one side wall of the blade entry indentation to receive the light reflected by the cutting blade, and
the controller includes
a conversion section configured to read the type information on a basis of the light generated at the light-emitting unit, applied to the identification code applied to the cutting blade, reflected by the cutting blade, and received at the light-receiving unit, and to acquire the type information of the cutting blade, and
a storage section configured to store the acquired type information of the cutting blade.

2. The cutting machine according to claim 1, wherein the conversion section generates digital signals from electrical signals generated on a basis of the light received at the light-receiving unit, and reads the type information on a basis of the digital signals.

3. The cutting machine according to claim 2, wherein the conversion section generates the digital signals by sampling the electrical signals at a sampling frequency corresponding to a rotational speed at which the cutting unit rotates the cutting blade when the workpiece is cut.

4. The cutting machine according to any one of claims 1 to 3, wherein the controller further includes a determination section configured to determine, on a basis of the type information of the cutting blade as acquired from the identification code, whether or not the cutting blade is suited for cutting the workpiece.

5. The cutting machine according to any one of claims 1 to 4, wherein
the detection unit further includes a second light-receiving unit disposed in the other side wall of the blade entry indentation of the base to receive the light generated at the light-emitting unit and emitted from the light-emitting unit toward the other side wall, and
the controller further includes a lower edge position detection section configured to detect a lower edge position of the grindstone portion of the cutting blade on a basis of a transmission amount of the light emitted from the light-emitting unit and received at the second light-receiving unit with or without being partly blocked by the grindstone portion of the cutting blade.

6. The cutting machine according to any one of claims 1 to 4, wherein
the detection unit further includes a second light-emitting unit disposed in the other side wall of the blade entry indentation of the base to apply light toward the opposing light-receiving unit, and
the controller further includes a lower edge position detection section configured to detect a lower edge position of the grindstone portion of the cutting blade on a basis of a transmission amount of the light generated at the second light-emitting unit and received at the light-receiving unit with or without being partly blocked by the grindstone portion of the cutting blade.

7. A reader for reading an identification code, which indicates type information, of a mobile body having the identification code applied thereto, comprising:
a light-emitting unit that emits light toward the identification code of the mobile body which is moving;
a light-receiving unit that receives the light reflected by the identification code;
a photoelectric conversion section that converts amounts of the light, which have been received at the light-receiving unit, to electrical signals; and
a digital conversion section that converts the electrical signals of the light, which have been converted from the amounts of the light at the photoelectric conversion section, to digital signals, and acquires the type information of the mobile body from the digital signals.

8. A reader for reading an identification code, which indicates type information, of a rotary body having the identification code applied thereto, comprising:
a light-emitting unit that emits light toward the identification code of the rotary body which is rotating;
a light-receiving unit that receives the light reflected by the identification code;
a photoelectric conversion section that converts amounts of the light, which have been received at the light-receiving unit, to electrical signals; and
a digital conversion section that converts the electrical signals of the light, which have been converted from the amounts of the light at the photoelectric conversion section, to digital signals, and acquires the type information of the rotary body from the digital signals.
